# EUROPEAN PATENT APPLICATION

(11) **EP 4 657 335 A1**
(43) Date of publication of application: **03.12.2025**
(21) Application number: 23918384.1
(22) Date of filing: 26.01.2023
(51) Int. Cl.: G06N 20/00

(54) **INFORMATION PROCESSING PROGRAM, INFORMATION PROCESSING DEVICE, AND INFORMATION PROCESSING METHOD**

(71) Applicant: FUJITSU LIMITED, Kawasaki-shi, Kanagawa 211-8588 (JP)
(72) Inventor: KATO, Takashi, Kawasaki-shi, Kanagawa 211-8588 (JP); SUZUKI, Hirofumi, Kawasaki-shi, Kanagawa 211-8588 (JP); HIGUCHI, Hiroyuki, Kawasaki-shi, Kanagawa 211-8588 (JP)
(74) Representative: Hoffmann Eitle
(86) International application number: PCT/JP2023/002451
(87) International publication number: WO 2024/157419

(57) **Abstract**

An information processing program for causing a computer to execute a process including selecting a phrase (104) corresponding to a specific part of speech from among phrases extracted from atypical text data (101) in a manufacturing process of a product, and performing training of a machine learning model that outputs a determination result (107) corresponding to an input feature amount and a feature amount contributing to the determination, using training data that associates the input feature amount including the selected phrase (104) and configuration information (105) of the product with label information (106) indicating the determination result (107) regarding the product.

## Description

### [Technical Field]

The present embodiment relates to an information processing program, an information processing device, and an information processing method.

### [Background Art]

In order to extract an important phrase from atypical text data such as a memo, general machine learning, explainable AI (XAI), and natural language processing (in other words, morphological analysis) may be used.

The explainable AI (XAI) is AI in which a process leading to a prediction result or a classification result is explainable. The natural language processing is a process for extracting words by dividing a memo into parts of speech.

### [Prior Art Reference]

### [Patent Document]

[Patent Document 1] Japanese Laid-open Patent Publication 2022-70766

### [Summary of the Invention]

### [Problems to be Solved by the Invention]

However, in general machine learning, an output is only a prediction and the understandability of the prediction is not obtained, and thus the output is difficult to accept at a site. At the site, data that is not generally used for learning, such as a memo, is accumulated, and thus it may be impossible to formalize the input content of such data.

Although it is also conceivable that the content of the memo written at the site is decomposed by natural language processing and input as the feature amount to improve the accuracy and indicate a more detailed prediction ground, a keyword having no direct relevance or the like may be indicated as the ground, causing a risk that the readability of an explanation may be lowered.

In one aspect, an object is to improve the readability of output data when atypical text data is input into a machine learning model.

### [Means to Solve the Problem]

According to an aspect of embodiment(s), an information processing program for causing a computer to execute a process including selecting a phrase corresponding to a specific part of speech from among phrases extracted from atypical text data in a manufacturing process of a product, and performing training of a machine learning model that outputs a determination result corresponding to an input feature amount and a feature amount contributing to the determination, using training data that associates the input feature amount including the selected phrase and configuration information of the product with label information indicating the determination result regarding the product.

### [Effect of Invention]

In one aspect, it is possible to improve the readability of output data when atypical text data is input into the machine learning model.

### [Brief Description of Drawings]

Fig. 1 is a graph illustrating a contribution level of a phrase to failure identification in a related example and an example.
Fig. 2 is a block diagram schematically illustrating a hardware configuration example of an information processing device according to an embodiment.
Fig. 3 is a block diagram schematically illustrating a software configuration example of the information processing device illustrated in Fig. 2.
Fig. 4 is a flowchart explaining machine learning processing in a learning phase of the information processing device illustrated in Fig. 2.
Fig. 5 is a flowchart explaining machine learning processing in a prediction phase of the information processing device illustrated in Fig. 2.
Fig. 6 is a table exemplifying region knowledge for part-of-speech selection illustrated in Figs. 4 and 5.
Fig. 7 is a table exemplifying region knowledge for keyword selection illustrated in Figs. 4 and 5.
Fig. 8 is a table exemplifying data other than a memo illustrated in Figs. 4 and 5.
Fig. 9 is a table exemplifying data other than a memo including a keyword illustrated in Figs. 4 and 5.
Fig. 10 is a diagram exemplifying output data in the information processing device illustrated in Fig. 2.
Fig. 11 is a diagram exemplifying an explainable AI model also outputting an explanation directly in addition to a prediction result in the embodiment.
Fig. 12 is a diagram exemplifying a model that adds an explanation to general AI in the embodiment.
Fig. 13 is a diagram exemplifying a model that adds an explanation to general AI regarding image data in the embodiment.

### [Description Of Embodiments]

### [A] Embodiment

Hereinafter, an embodiment will be described with reference to the drawings. However, the embodiments described below are merely examples, and there is no intention to exclude the application of various modifications and techniques that are not explicitly described in the embodiments. That is, the present embodiment can be variously modified and implemented without departing from the gist thereof. In addition, each drawing is not intended to include only the components illustrated in the drawing, but may include other functions and the like.

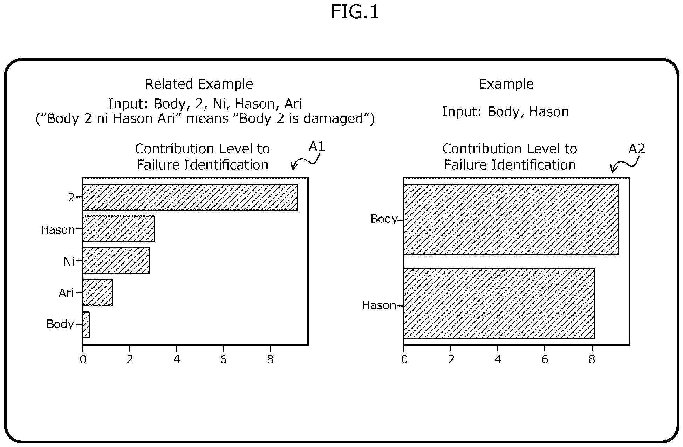

Fig. 1 is a graph illustrating a contribution level of a phrase to failure identification in a related example and an example.

Atypical text data such as a memo is created at a site such as a production line, and thus data used for prediction by AI sometimes has a mismatched format. Regarding what kind of failure has occurred at the production line or other information, text data such as a memo that is not formalized is often created. Data that is not used for learning without being processed may be accumulated.

For example, assume that there is an input indicating that "Body 2 ni Hason Ari" (Body 2 is damaged) from a memo. When natural sentence processing (in other words, morphological analysis) is applied to this memo, all the parts of speech included in the memo are output as "Body" (noun), "2" (noun)," "ni" (postpositional particle), "Hason" (noun), "Ari" (verb), as a result.

If all the parts of speech included in the memo are input to an AI model, and "2" and "ni" are output as important factors regarding a contribution level of each part of speech to failure identification, as illustrated in the related example of a reference sign A1, the understandability of the output is lowered.

Therefore, in the example, by utilizing region knowledge that only a noun is used among the parts of speech included in the natural sentence processing result, "Body" (noun), "2" (noun), and "Hason" (noun) may be output.

Furthermore, in the embodiment, a keyword valid for an explanation may be narrowed down, for example, by excluding a part of speech of only one character or only a number. As a result, "Body" (noun) and "Hason" (noun) are output.

Thus, as illustrated in the example of a reference sign A2, only a keyword valid for the explanation is input to the AI model, and output data indicating that "Body" and "Hason" are valid for identification of a certain failure is generated regarding the contribution level of each part of speech to failure identification, increasing the understandability of the output data.

In addition, assume that there is an input indicating that "Zure ga Kijun yori Ookii" (Deviation is greater than the standard) from a memo. Also in this case, as in the example illustrated in Fig. 1, when natural sentence processing is applied to this memo, all the parts of speech included in the memo are output as "Zure" (noun), "ga" (postpositional particle), "Kijun" (noun), "yori" (postpositional particle), and "Ookii" (adjective), as a result.

By utilizing region knowledge that an adjective is used in addition to the noun described above in Fig. 1 among the parts of speech included in the natural sentence processing result, "Zure" (noun), "Kijun" (noun), and "Ookii" (adjective) may be output.

Furthermore, a keyword valid for the explanation may be narrowed down, for example, by excluding a part of speech of only one character or only a number. In the case of the present example, since the output result for which the region knowledge is utilized does not include a part of speech of only one character or only a number, "Zure" (noun), "Kijun" (noun), "Ookii" (adjective) is output without a change.

Thus, only a keyword valid for the explanation is input to the AI model, and output data indicating that "Zure," "Kijun," and "Ookii" are valid for identification of a certain failure is generated regarding the contribution level of each part of speech to failure identification, increasing the understandability of the output data.

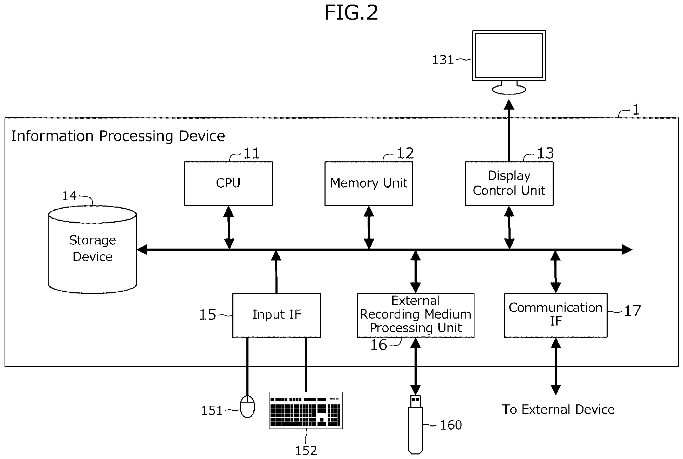

Fig. 2 is a block diagram schematically illustrating a hardware configuration example of an information processing device 1 according to the embodiment.

As illustrated in Fig. 1, the information processing device 1 includes a central processing unit (CPU) 11, a memory unit 12, a display control unit 13, a storage device 14, an input interface (IF) 15, an external recording medium processing unit 16, and a communication IF 17.

The memory unit 12 is an example of the storage unit, and is, for example, a read only memory (ROM), a random access memory (RAM), or the like. A program such as Basic Input/Output System (BIOS) may be written in the ROM of the memory unit 12. The software program of the memory unit 12 may be appropriately read and executed by the CPU 11. In addition, the RAM of the memory unit 12 may be used as a temporary recording memory or a working memory.

The display control unit 13 is connected to a display device 131 and controls the display device 131. The display device 131 is a liquid crystal display, an Organic Light-Emitting Diode (OLED) display, a Cathode Ray Tube (CRT), an electronic paper display, or the like, and displays various types of information to an operator or the like. The display device 131 may be combined with an input device, and may be, for example, a touch panel. The display device 131 displays various types of information to a user of the information processing device 1.

The storage device 14 is a high-IO performance storage device, and for example, a dynamic random access memory (DRAM), a solid state drive (SSD), a storage class memory (SCM), or a hard disk drive (HDD) may be used.

The input IF 15 is connected to an input device such as a mouse 151 or a keyboard 152 and may control the input device such as the mouse 151 or the keyboard 152. The mouse 151 and the keyboard 152 are examples of the input devices, and the operator performs various input operations via these input devices.

The external recording medium processing unit 16 is configured such that a recording medium 160 can be mounted. The external recording medium processing unit 16 is configured to be able to read information recorded on the recording medium 160 in a state where the recording medium 160 is mounted. In this example, the recording medium 160 is portable. For example, the recording medium 160 is a flexible disk, an optical disk, a magnetic disk, a magnetooptical disk, a semiconductor memory, or the like.

The communication IF 17 is an interface for enabling communication with an external device.

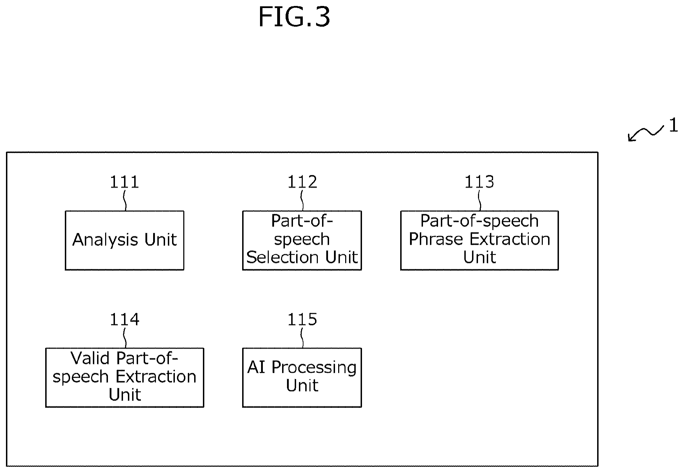

The CPU 11 is an example of a processor, and is a processing device that performs various controls and calculations. The CPU 11 implements various functions as described later with reference to Fig. 3 by executing an operating system (OS) and a program read into the memory unit 12. Note that the CPU 11 may be a multiprocessor including a plurality of CPUs, a multi-core processor including a plurality of CPU cores, or a configuration including a plurality of multi-core processors.

The device for controlling the operation of the entire information processing device 1 is not limited to the CPU 11, and may be, for example, any one of an MPU, DSP, ASIC, PLD, and FPGA. In addition, the device for controlling the operation of the entire information processing device 1 may be a combination of two or more types of the CPU, MPU, DSP, ASIC, PLD, and FPGA. Note that MPU is an abbreviation for micro processing unit, DSP is an abbreviation for digital signal processor, and ASIC is an abbreviation for application specific integrated circuit. Furthermore, PLD is an abbreviation for programmable logic device, and FPGA is an abbreviation for field programmable gate array.

Fig. 3 is a block diagram schematically illustrating a software configuration example of the information processing device 1 according to the embodiment.

The CPU 11 of the information processing device 1 may function as an analysis unit 111, a part-of-speech selection unit 112, a part-of-speech phrase extraction unit 113, a valid part-of-speech extraction unit 114, and an AI processing unit 115.

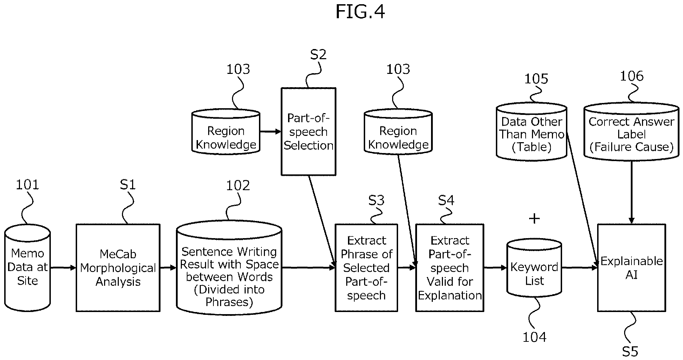

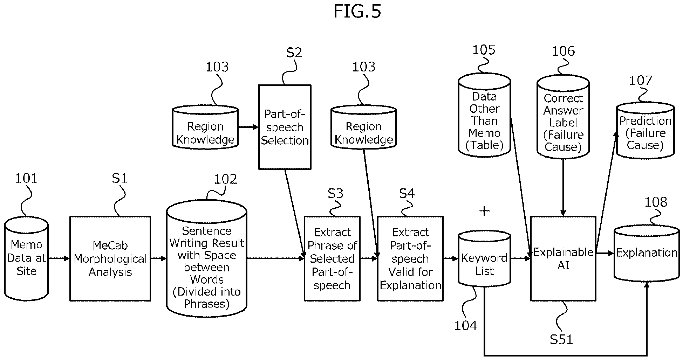

The analysis unit 111 performs morphological analysis on memo data 101 at the site (to be described later with reference to Figs. 4, 5, and the like) using MeCab or the like that is an existing open source algorithm, and outputs a sentence writing result 102 with a space between words in which the sentence is divided into part-of-speech phrases (to be described later with reference to Figs. 4, 5, and the like).

The part-of-speech selection unit 112 selects parts of speech used for explainable AI processing such as a noun and adjective based on region knowledge 103 (to be described later with reference to Figs. 4, 5, and the like).

The part-of-speech phrase extraction unit 113 extracts the parts of speech selected by the part-of-speech selection unit 112 from the sentence writing result 102 with a space between words.

The valid part-of-speech extraction unit 114 extracts parts of speech valid for the explanation from among the parts of speech extracted by the part-of-speech phrase extraction unit 113 based on the region knowledge 103 that a part of speech of only one character or only a number is excluded, and outputs the extracted parts of speech as a keyword list.

In other words, the part-of-speech phrase extraction unit 113 and the valid part-of-speech extraction unit 114 select a phrase corresponding to a specific part of speech from among phrases extracted from atypical text data in a manufacturing process of the product. In the process for selecting the phrase, the valid part-of-speech extraction unit 114 may further exclude at least one of a phrase having a character length equal to or shorter than a predetermined character length and a phrase composed only of a number. The part-of-speech phrase extraction unit 113 may select a noun phrase and an adjective phrase in the process for selecting the phrase.

The AI processing unit 115 performs learning of the explainable AI model based on the keyword list 104 output by the valid part-of-speech extraction unit 114, data other than a memo 105 (to be described later with reference to Figs. 4, 5, and the like), and a correct answer label 106 (to be described later with reference to Figs. 4, 5, and the like). In addition, the AI processing unit 115 outputs a failure cause prediction result 107 (to be described later with reference to Figs. 4, 5, and the like) and an explanation 108 (to be described later with reference to Figs. 4, 5, and the like) using the learned explainable AI model.

In other words, the AI processing unit 115 trains the machine learning model that outputs a determination result corresponding to an input feature amount and a feature amount contributing to the determination, using training data that associates the input feature amount including the selected phrase and configuration information of the product with label information indicating the determination result regarding the product. In the process for performing training of the machine learning model, the AI processing unit 115 may output the failure cause of the product as the determination result and output the contribution level of each selected phrase to failure identification as a contributing feature amount.

The machine learning processing in a learning phase by the information processing device 1 illustrated in Fig. 2 will be described with reference to a flowchart (steps S1 to S5) illustrated in Fig. 4.

The analysis unit 111 performs morphological analysis on the memo data 101 at the site using an existing algorithm such as MeCab, and outputs the sentence writing result 102 with a space between words in which the sentence is divided into part-of-speech phrases (step S1).

The part-of-speech selection unit 112 selects parts of speech used for explainable AI processing such as a noun and adjective based on the region knowledge 103 (step S2).

The part-of-speech phrase extraction unit 113 extracts the parts of speech selected by the part-of-speech selection unit 112 from the sentence writing result 102 with a space between words (step S3).

The valid part-of-speech extraction unit 114 extracts parts of speech valid for the explanation from among the parts of speech extracted by the part-of-speech phrase extraction unit 113 based on the region knowledge 103 that a part of speech of only one character or only a number is excluded, and outputs the extracted parts of speech as a keyword list (step S4).

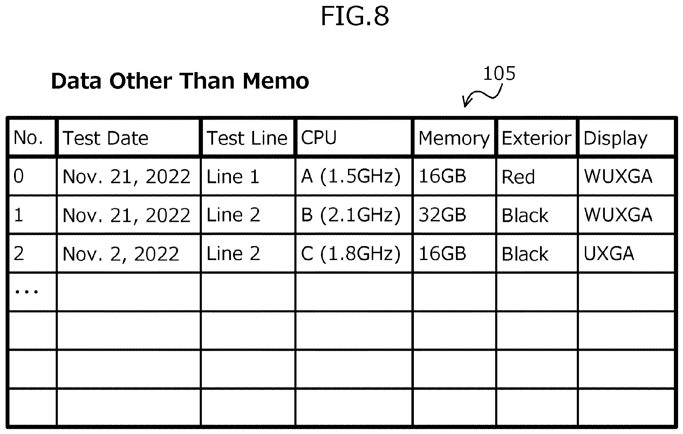

The AI processing unit 115 performs learning of the explainable AI model based on the keyword list 104 output by the valid part-of-speech extraction unit 114, the data other than a memo 105, and the correct answer label 106 (step S5). Then, the machine learning processing in the learning phase ends. Note that the data other than a memo 105 may be a table including a test date, a test line, and specifications of a product that is subject to failure cause identification, as described later with reference to Fig. 8 and the like.

Next, machine learning processing in a prediction phase by the information processing device 1 illustrated in Fig. 2 will be described with reference to a flowchart (steps S1 to S4, S51) illustrated in Fig. 5.

The process in steps S1 to S4 is the same as the process described with reference to Fig. 4.

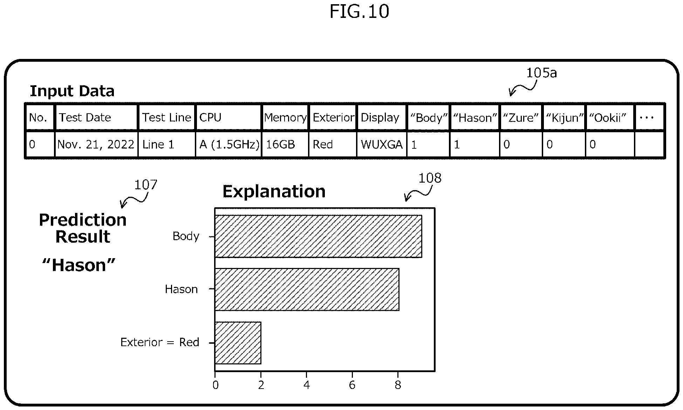

The AI processing unit 115 outputs the failure cause prediction result 107 and the explanation 108 using the learned explainable AI model (step S51). Then, the machine learning processing in the prediction phase ends. Note that details of the failure cause prediction result 107 and the explanation 108 will be described later with reference to Fig. 10 and the like.

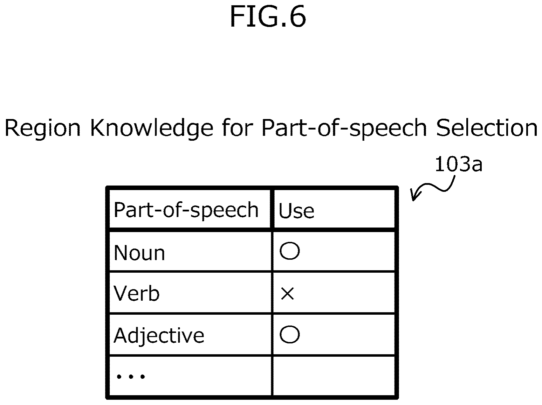

Fig. 6 is a table exemplifying region knowledge 103a for part-of-speech selection illustrated in Figs. 4 and 5.

The part-of-speech selection unit 112 may select parts of speech used for the explainable AI processing based on the region knowledge 103a for part-of-speech selection exemplified in Fig. 6.

In the region knowledge 103a for the part-of-speech selection exemplified in Fig. 6, a noun and adjective are to be used (see the mark "∘"), and a verb is not to be used (see the mark "×").

Thus, the part-of-speech selection unit 112 selects the noun and adjective as parts of speech used for the explainable AI processing.

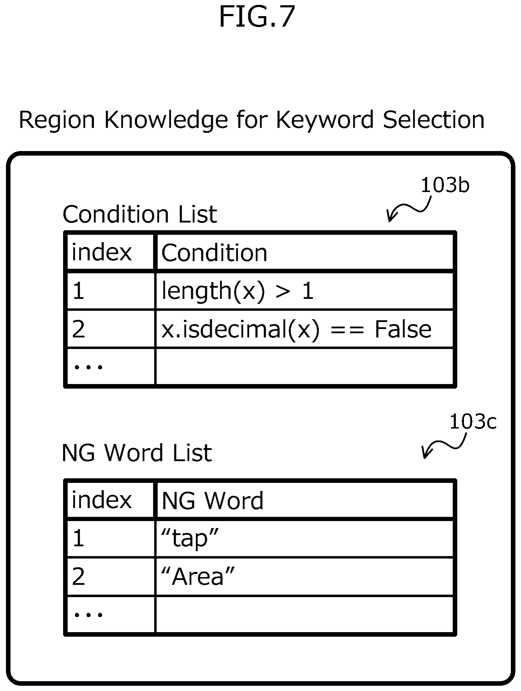

Fig. 7 is a table exemplifying region knowledge for keyword selection illustrated in Figs. 4 and 5.

As illustrated in Fig. 7, the region knowledge for keyword selection may include a condition list 103b and an NG word list 103c.

The valid part-of-speech extraction unit 114 may extract parts of speech valid for the explanation based on at least one of the condition list 103b and the NG word list 103c.

In the condition list 103b exemplified in Fig. 7, a condition "length (x) > 1" in index 1 indicates that the length of the character is longer than 1, and a condition "x.isdecimal (x) == False" in index 2 indicates that the phrase is not composed only of a number.

The NG word list 103c exemplified in Fig. 7 includes an NG word "tap" in index 1 and an NG word "area" in index 2.

Then, the valid part-of-speech extraction unit 114 excludes a part of speech having a character length equal to or shorten than 1, a phrase composed of only a number, or a part of speech corresponding to the NG word "tap" or "area" from among the parts of speech extracted by the part-of-speech phrase extraction unit 113, and outputs the remaining phrases as the keyword list 104.

Fig. 8 is a table exemplifying data 105 other than a memo illustrated in Figs. 4 and 5.

In the data 105 other than a memo exemplified in Fig. 8, a test date, a test line, a CPU type, a memory capacity, an exterior color, and a display type are registered for the product subject to failure cause identification.

The AI processing unit 115 may perform learning and prediction of/by the explainable AI model using the data 105 other than a memo.

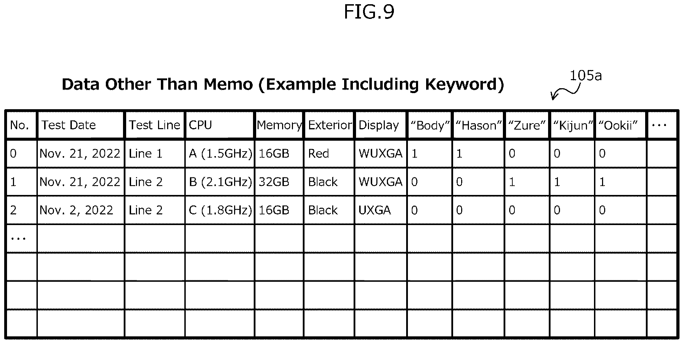

Fig. 9 is a table exemplifying data 105a other than a memo including a keyword illustrated in Figs. 4 and 5.

As illustrated in Fig. 9, in the data 105 other than a memo illustrated in Fig. 8, a keyword extracted by the valid part-of-speech extraction unit 114 may be registered as the data 105a other than a memo including the keyword.

In the example illustrated in Fig. 9, "1" is registered in the flags of the keywords "Body" and "Hason" for the data in No. 0, and it is indicated that "Body" and "Hason" have been extracted by the valid part-of-speech extraction unit 114. In addition, "1" is registered in the flags of the keywords "Zure," "Kijun," and "Ookii" for the data in No. 1, and it is indicated that "Zure," "Kijun," and "Ookii" have been extracted by the valid part-of-speech extraction unit 114. Furthermore, "0" is registered in the flags of all the keywords for the data in No. 2, and it is indicated that none of the keywords have been extracted by the valid part-of-speech extraction unit 114.

Fig. 10 is a diagram exemplifying the output data in the information processing device 1 illustrated in Fig. 2.

As illustrated in Fig. 10, the output data may include the data 105a other than a memo including a keyword for a subject of failure cause identification (in other words, the input data), the prediction result 107, and the explanation 108.

In the example illustrated in Fig. 10, "Body" and "Hason" have been registered as the data 105a other than a memo including the keyword, "Hason" is indicated as the prediction result 107, and the contribution level of each of "Body," "Hason," and "Exterior = Red" to failure identification is illustrated in a bar graph format as the explanation 108.

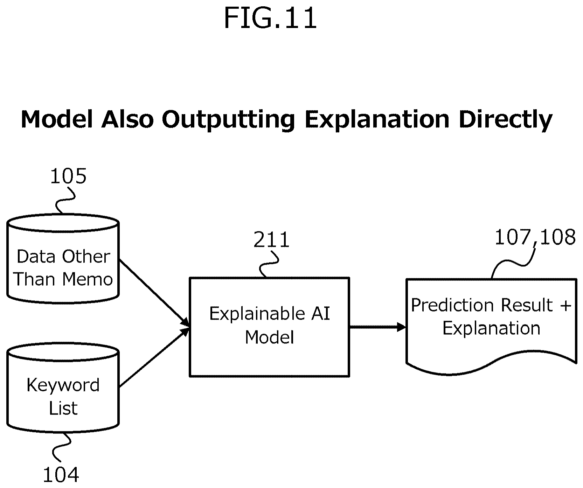

Fig. 11 is a diagram exemplifying an explainable AI model also outputting the explanation directly in addition to the prediction result in the embodiment.

The AI processing unit 115 illustrated in Fig. 3 may function as an explainable AI model 211 as illustrated in Fig. 11.

The explainable AI model 211 presents the prediction result 107 and a ground for the prediction result 107 (in other words, the explanation 108) to a certain instance based on the data 105 other than a memo and the keyword list 104.

Wide Learning (WL) may be applied as an example of the explainable AI model 211.

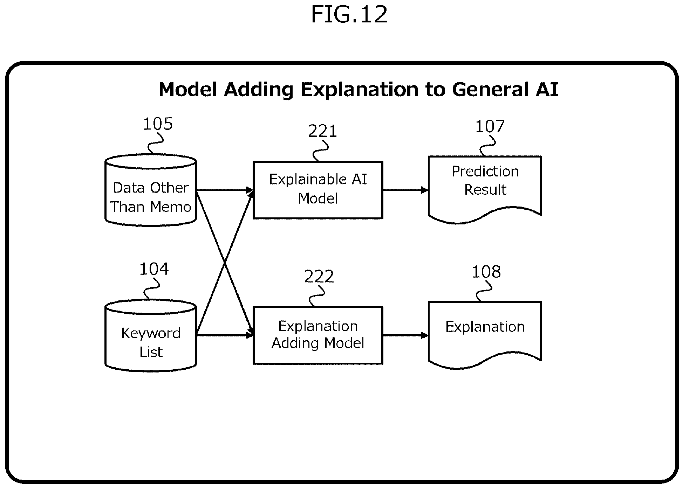

Fig. 12 is a diagram exemplifying a model that adds an explanation to general AI in the embodiment.

The AI processing unit 115 illustrated in Fig. 3 may function as a general AI model 221 and an explanation adding model 222 as illustrated in Fig. 12.

The general AI model 221 outputs the prediction result 107 to a certain instance based on the data 105 other than a memo and the keyword list 104.

The explanation adding model 222 adds the explanation 108 to a certain instance based on the data 105 other than a memo and the keyword list 104.

Deep Learning (DL) or Random Forest may be applied as an example of the general AI model 221, and LIME, SHAP, or WL may be applied as an example of the explanation adding model 222.

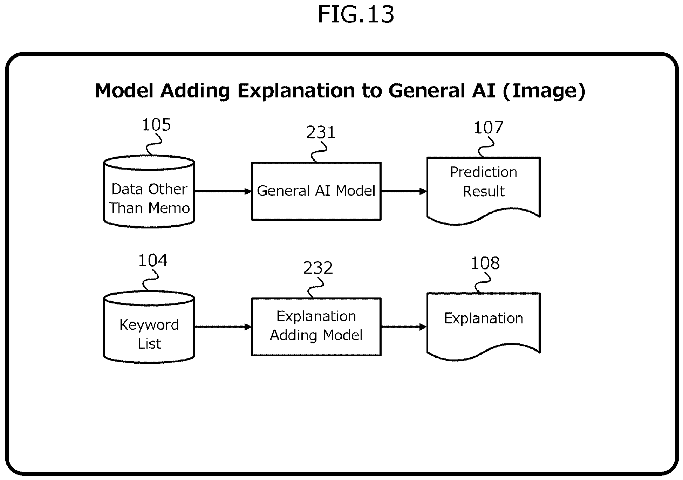

Fig. 13 is a diagram exemplifying a model that adds an explanation to the general AI for image data in the embodiment.

The AI processing unit 115 illustrated in Fig. 3 may function as a general AI model 231 and an explanation adding model 232 as illustrated in Fig. 13.

The general AI model 231 outputs the prediction result 107 to a certain instance based on the data 105 other than a memo serving as image data.

The explanation adding model 232 adds the explanation 108 to a certain instance based on the keyword list 104.

DL may be applied as an example of the general AI model 231, and WL may be applied as an example of the explanation adding model 222.

As described above, as long as a memo is attached to an image model, it can be used as the input of the AI model.

### [B] Effects

According to the information processing program, the information processing device, and the information processing method in the above-described embodiments, for example, the following operational effects can be achieved.

The part-of-speech phrase extraction unit 113 and the valid part-of-speech extraction unit 114 select the phrase corresponding to the specific part of speech from among phrases extracted from atypical text data in the manufacturing process of the product. The AI processing unit 115 trains the machine learning model that outputs the determination result corresponding to the input feature amount and the feature amount contributing to the determination, using training data that associates the input feature amount including the selected phrase and configuration information of the product with label information indicating the determination result regarding the product.

As a result, it is possible to improve the readability of output data when the atypical text data is input into the machine learning model. In addition, the understandability can be obtained through the prediction by the explainable AI. Furthermore, a keyword to be used is effectively and automatically extracted based on the region knowledge that the data is a memo at the site in the production line, thus making it possible to further improve the readability and understandability of the explanation and automate a cycle of learning and prediction at the site.

In the process for selecting the phrase, the valid part-of-speech extraction unit 114 further excludes at least one of a phrase having a character length equal to or shorter than a predetermined character length and a phrase composed only of a number.

As a result, it is possible to prevent an insignificant phrase such as a phrase of one character or a number from being output as the feature amount contributing to the determination.

The part-of-speech phrase extraction unit 113 selects a noun phrase and an adjective phrase in the process for selecting the phrase.

As a result, it is possible to output a valid part of speech such as the noun and adjective, as the feature amount contributing to the determination.

In the process for performing training of the machine learning model, the AI processing unit 115 outputs the failure cause of the product as the determination result and outputs the contribution level of each selected phrase to failure identification as the contributing feature amount.

As a result, it is possible to output appropriate data for identifying the failure cause of the product in the manufacturing process of the product.

### [C] Others

The disclosed technology is not limited to the above-described embodiments, and various modifications can be made without departing from the gist of the present embodiment. Each configuration and each process of the present embodiment can be selected or omitted as needed, or may be appropriately combined.

In the above-described embodiments, examples in which a significant phrase is extracted from atypical text data in Japanese has been described, but the present embodiment is not limited thereto. The important phrase may be extracted from atypical text data in a language other than Japanese such as English.

For example, regarding a memo reading "Deviation is greater than the standard," the analysis unit 111 applies natural sentence processing and outputs "deviation" (noun), "is" (verb), "greater" (adjective), "than" (conjunction), "the" (article), and "standard" (noun)."

The part-of-speech phrase extraction unit 113 outputs "deviation" (noun), "greater" (adjective), and "standard" (noun) by utilizing the region knowledge 103 that a noun and adjective are used.

Furthermore, a keyword valid for the explanation may be narrowed down, for example, by excluding a part of speech of only one character or only a number. In the case of the present example, since the output result for which the region knowledge is utilized does not include a part of speech of only one character or only a number, the valid part-of-speech extraction unit 114 outputs "deviation" (noun), "greater" (adjective), "standard" (noun) without a change.

In addition, for example, regarding a memo reading "Body 2 damaged," the analysis unit 111 applies natural sentence processing and outputs "Body" (noun), "2" (noun), and "damaged" (verb).

The part-of-speech phrase extraction unit 113 outputs "body" (noun), "2" (noun), and "damaged" (verb) without a change by utilizing the region knowledge 103 that a past particle form of a verb is used in addition to a noun and adjective.

Furthermore, a keyword valid for the explanation may be narrowed down, for example, by excluding a part of speech of only one character or only a number. In the case of the present example, the valid part-of-speech extraction unit 114 outputs "body" (noun) and "damaged" (verb).

### [Description of Reference Sign]

1 Information processing device
11 CPU
12 Memory unit
13 Display control unit
14 Storage device
16 External recording medium processing unit
101 Memo data
102 Sentence writing result with space between words
103, 103a Region knowledge
103b Condition list
103c NG word list
104 Keyword list
105, 105a Data other than memo
106 Correct answer label
107 Prediction result
108 Explanation
111 Analysis unit
112 Part-of-speech selection unit
113 Part-of-speech phrase extraction unit
114 Valid part-of-speech extraction unit
115 AI processing unit
131 Display device
151 Mouse
152 Keyboard
160 Recording medium
211 Explainable AI model
221, 231 General AI model
222, 232 Explanation adding model
15 Input IF
17 Communication IF

## Claims

1. An information processing program for causing a computer to execute a process comprising:
selecting a phrase corresponding to a specific part of speech from among phrases extracted from atypical text data in a manufacturing process of a product, and
performing training of a machine learning model that outputs a determination result corresponding to an input feature amount and a feature amount contributing to the determination, using training data that associates the input feature amount including the selected phrase and configuration information of the product with label information indicating the determination result regarding the product.

2. The information processing program according to Claim 1, causing the computer to execute a process comprising,
in the process for selecting the phrase, further excluding at least one of a phrase having a character length equal to or shorter than a predetermined character length and a phrase composed only of a number.

3. The information processing program according to Claim 1 or 2, causing the computer to execute a process comprising
selecting a noun phrase and an adjective phrase in the process for selecting the phrase.

4. The information processing program according to Claim 1 or 2, causing the computer to execute a process comprising,
in the process for performing training of the machine learning model, outputting a cause of a failure of the product as the determination result, and outputting a contribution level of each phrase selected as the contributing feature amount to identification of the failure.

5. An information processing device comprising a processor that
selects a phrase corresponding to a specific part of speech from among phrases extracted from atypical text data in a manufacturing process of a product, and
performs training of a machine learning model that outputs a determination result corresponding to an input feature amount and a feature amount contributing to the determination, using training data that associates the input feature amount including the selected phrase and configuration information of the product with label information indicating the determination result regarding the product.

6. The information processing device according to Claim 5, wherein the processor,
in the process for selecting the phrase, further excludes at least one of a phrase having a character length equal to or shorter than a predetermined character length and a phrase composed only of a number.

7. The information processing device according to Claim 5 or 6, wherein the processor,
selects a noun phrase and an adjective phrase in the process for selecting the phrase.

8. The information processing device according to Claim 5 or 6, wherein the processor,
in the process for performing training of the machine learning model, outputs a cause of a failure of the product as the determination result, and outputs a contribution level of each phrase selected as the contributing feature amount to identification of the failure.

9. An information processing method wherein a computer executes a process comprising:
selecting a phrase corresponding to a specific part of speech from among phrases extracted from atypical text data in a manufacturing process of a product, and
performing training of a machine learning model that outputs a determination result corresponding to an input feature amount and a feature amount contributing to the determination, using training data that associates the input feature amount including the selected phrase and configuration information of the product with label information indicating the determination result regarding the product.

10. The information processing method according to Claim 9, wherein the computer executes a process comprising,
in the process for selecting the phrase, further excluding at least one of a phrase having a character length equal to or shorter than a predetermined character length and a phrase composed only of a number.

11. The information processing method according to Claim 9 or 10, wherein the computer executes a process comprising
selecting a noun phrase and an adjective phrase in the process for selecting the phrase.

12. The information processing method according to Claim 9 or 10, wherein the computer executes a process comprising,
in the process for performing training of the machine learning model, outputting a cause of a failure of the product as the determination result, and outputting a contribution level of each phrase selected as the contributing feature amount to identification of the failure.
